# EUROPÄISCHE PATENTSCHRIFT

(11) **EP 0 684 480 B1**
(45) Veröffentlichungstag und Bekanntmachung des Hinweises auf die Patenterteilung: **20.01.1999**
(21) Anmeldenummer: 95108133.0
(22) Anmeldetag: 26.05.1995
(51) Int. Cl.: G01P 3/489

(54) **Verfahren und Vorrichtung zur Drehzahlerfassung**
Method and apparatus for measuring speed of rotation
Procédé et dispositif de mesure de la vitesse de rotation

(30) Priorität: 26.05.1994 DE 4418424
(43) Veröffentlichungstag der Anmeldung: 29.11.1995
(73) Patentinhaber: KNORR-BREMSE Systeme für Nutzfahrzeuge GmbH, 80809 München (DE)
(72) Erfinder: Gschossmann, Günther, D-84453 Mühldorf (DE); Bielig, Peter Michael, D-80636 München (DE)
(74) Vertreter: von Bülow, Tam, Dr.

(56) Entgegenhaltungen:
- EP-A- 0 359 422
- EP-A- 0 373 131
- DE-A- 3 719 439
- IBM TECHNICAL DISCLOSURE BULLETIN, Bd. 15, Nr. 10, 1.März 1973 NEW-YORK, Seiten 3187-3189, D.R.WOOD, SR. 'DIGITAL SPEED DETECTION'

## Beschreibung

Die Erfindung bezieht sich auf ein Verfahren und eine Vorrichtung zur Drehzahlerfassung gemäß dem Oberbegriff des Patentanspruches 1 bzw. des Patentanspruches 5.

Zur Drehzahlerfassung von Fahrzeugrädern oder sonstiger rotierender Teile ist es üblich, an dem rotierenden Teil ein sog. Polrad zu befestigen, das sich mit diesem Teil dreht und an seinem Außenumfang radial vorstehende Zähne aufweist, die in äquidistantem Abstand rings um den Außenumfang des Polrades verteilt sind. Ein induktiver Sensor, der nahe dem Außenumfang des Polrades angeordnet ist, spricht auf Änderungen eines von ihm erzeugten Magnetfeldes an und erzeugt im Idealfall eine sinusförmige Wechselspannung. Die Änderungen des Magnetfeldes werden durch die abwechselnd durch das Magnetfeld des Sensors laufenden Zähne und Zahnlücken erzeugt. Die Frequenz dieser Wechselspannung ist der Drehzahl des rotierenden Teiles proportional. Solche Sensoren werden beispielsweise zur Erfassung der Raddrehzahl von Fahrzeugen, die mit einem Blockierschutz- und/oder einem Antriebsschlupfregler ausgestattet sind, verwendet.

Aufgrund von Herstelltoleranzen, Beschädigungen oder Verschmutzungen des Polrades weicht die Form der vom induktiven Sensor erzeugten Wechselspannung in der Praxis jedoch häufig von dem sinusförmigen Verlauf ab, was bei Auswertung des Signales dieser Wechselspannung zu Ungenauigkeiten führt. Beispielsweise werden beim Einsatz im Zusammenhang mit blockiergeschützten Bremssystemen Fehler hinsichtlich der ermittelten Raddrehzahl auftreten, was dann zu einer Verschlechterung der Blockierschutzregelung führen kann.

Bei den bekannten Vorrichtungen wird die von dem induktiven Sensor abgegebene Wechselspannung einer Komparatorschaltung zugeführt, deren rechteckförmiges Ausgangssignal dann ebenfalls gestört ist. Dieses Problem versuchte man durch Filterung des Sensorsignales zu lösen, was aber nur in sehr begrenztem Umfange möglich ist, da die auftretenden Störungen meist im gleichen Frequenzbereich liegen, wie das Nutzsignal.

Ebenso ist aus "Digital Speed Detection" (R.Wood, IBM Techn. Discl. Bull., Vol. 15, No. 10, 1973) bekannt, aus beiden Flanken (positiv und negativ) der vom Sensor abgegebenen Wechselspannung die Perioden dauer zu bestimmen, um die Drehzahl mit hoher Datenrate zu ermitteln und Signal-Asymmetrien aus zugleichen.

Aufgabe der Erfindung ist es, Verfahren und Vorrichtung der eingangs genannten Art dahingehend zu verbessern, daß die Meßgenauigkeit erhöht wird und zwar auch bei gestörtem Ausgangssignal des induktiven Sensors. Diese Aufgabe wird beim Verfahren durch die im Anspruch 1 und bei der Vorrichtung durch die im Anspruch 5 angegebenen Merkmale gelöst. Vorteilhafte Ausgestaltungen und Weiterbildungen der Erfindung sind den abhängigen Ansprüchen zu entnehmen.

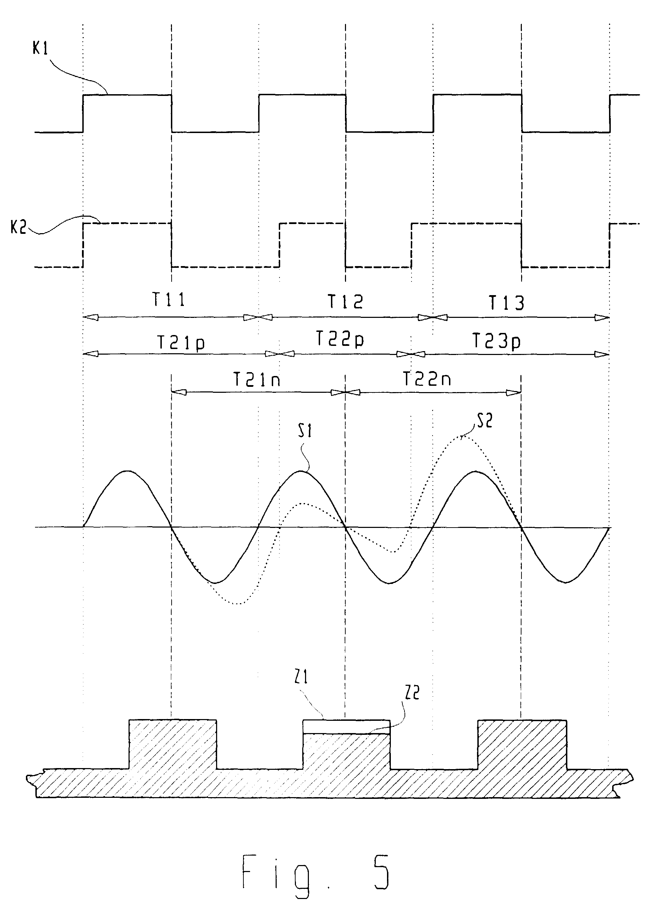

Die Erfindung geht von der Erkenntnis aus, daß bei bestimmten Fehlern des Polrades (z. B. Fehlern in der Zahnhöhe eines Zahnes des Polrades) das Ausgangssignal des Komparators dahingehend gestört ist, daß sich bei konstanter Drehzahl zwar der zeitliche Abstand zwischen positiven Flanken ändert, nicht aber der Abstand zwischen negativen Flanken (oder umgekehrt). Dies soll vorab im Zusammenhang mit Fig. 5 näher erläutert werden. Die unterste Abbildung zeigt drei Zähne eines abgewickelten Polrades für die beiden Fälle eine korrekte Zahnhöhe Z1 und einer fehlerhaften, hier kleineren Zahnhöhe Z2 beim mittleren Zahn. In der unmittelbar darüber liegenden Abbildung ist der Verlauf der Wechselspannung des induktiven Sensors bei gleichbleibender Drehzahl gezeigt, wobei die Kurve S1 sich auf die korrekte Zahnhöhe Z1 bezieht und hier den idealen sinusförmigen Verlauf haben soll. Es ist zu erkennen, daß die Nulldurchgänge des Signales S1 jeweils auf die Mitte der Zähne bzw. die Mitte der Zahnlücke ausgerichtet sind. Wird dieses sinusförmige Signal S1 in einem Komparator zu einem rechteckförmigen Signal umgewandelt, so ergibt sich die oberste Kurve K1. Im Falle eines Zahnhöhenfehlers, wie er bei Z2 in der untersten Abbildung der Fig. 5 dargestellt ist, ergibt sich als Sensorsignal dagegen der Kurvenverlauf S2 und daraus das Komparatorsignal K2. Die Form des Signales S2 weicht erheblich vom idealen Sinus ab. Es ist aber zu erkennen, daß die Nulldurchgänge des Signales S2, wenn dieses von positiven zu negativen Werten hinläuft (vgl. die gestrichelten senkrechten Linien), mit denen des Signales S1 übereinstimmen. Dementsprechend fallen die negativen Flanken des Komparatorsignales K2 mit den negativen Flanken des Komparatorsignales K1 zusammen. Als negative Flanke werden hier Sprünge der Signale K1 und K2 von hohem Pegel auf niedrigem Pegel definiert.

Die positiven Flanken (vgl. die gepunkteten senkrechten Linien) sind dagegen bei dem gestörten Zahn phasenverschoben, so daß eine Auswertung, die die Periodendauer des Komparatorsignales K2 von positiver Flanke zur nächsten positiven Flanke (T21p, T22p und T23p) fehlerhaft wäre, da die Periodendauer T22p zu kurz und die Periodendauern T21p und T23p zu lang sind. Dagegen sind in diesem Beispiel die negativen Flanken des fehlerhaften Zahnes Z2 trotzdem korrekt, d.h. die von einer negativen Flanke des Signales K2 zur nächst folgenden negativen Flanke gemessenen Periodendauern T21n und T22n untereinander gleich lang und auch gleich lang wie die Periodendauern T11, T12 und T13 des fehlerfreien Zahnes Z1.

Ausgehend von der obigen Erkenntnis liegt der Erfindung das Prinzip zugrunde, diejenigen gleichsinnigen Flanken des Komparatorsignales zur Drehzahlbestimmung heranzuziehen, deren Abstände im Durchschnitt weniger stark schwanken. Im Beispiel der Fig. 5 sind die Abstände der negativen Flanken, d.h. die Periodendauern T21n und T22n gleich und werden daher für die Drehzahlermittlung herangezogen. Die Abstände der positiven Flanken des Signales K2, d.h. die Periodendauern T21p, T22p und T23p schwanken dagegen relativ stark und würden das Signal verfälschen.

Das Grundprinzip der Vorrichtung nach der Erfindung liegt unter Anwendung dieses Grundgedankens darin, eine Auswertelogik wahlweise umzuschalten, daß sie entweder auf die negativen oder die positiven Flanken des Komparatorsignales anspricht, wobei die Umschaltung in Abhängigkeit davon erfolgt, wie gleichmäßig die positiven oder die negativen Flanken verteilt sind. Dies kann auf verschiedene Weisen realisiert werden. Eine Auswertelogik kann zunächst nur Flanken der einen Art (z.B. positive Flanken) auswerten und, falls dort unregelmäßige Abstände festgestellt werden, versuchsweise auf eine Auswertung der anderen Flanken (z.B. der negativen Flanken) umschalten und dann diejenige Auswertelogik aktivieren, die die besseren, d.h. gleichmäßigeren, Ergebnisse zeigt. Bei einer anderen Variante sind Auswertelogiken für die positiven und die negativen Flanken simultan aktiviert, wobei diejenige, die die besseren Ergebnisse zeigt, ausgewertet wird.

Bei einer weiteren Variante hat die Auswertelogik nur Vorkehrungen für die Auswertung einer Art von Flanken, z.B. positiver Flanken. Eine Umschaltung auf die andere Art von Flanken erfolgt dadurch, daß ein Invertierer aktiviert wird, der die Flankenart wechselt.

Nach einer weiteren Variante ist ebenfalls in der Auswertelogik nur die Auswertung einer Art von Flanken (z.B. positiver Flanken) vorgesehen. Ein Wechsel zur anderen Art von Flanken erfolgt durch gesteuertes Umpolen des Ausgangssignales des induktiven Sensors.

Im folgenden wird die Erfindung anhand von Ausführungsbeispielen im Zusammenhang mit der Zeichnung ausführlicher erläutert. Es zeigt:
- Fig. 1: ein Prinzipschaltbild einer Vorrichtung zur Drehzahlerfassung nach einem ersten Ausführungsbeispiel der Erfindung;
- Fig. 2: ein Prinzipschaltbild einer Vorrichtung zur Drehzahlerfassung nach einem zweiten Ausführungsbeispiel der Erfindung;
- Fig. 3: ein Prinzipschaltbild einer Vorrichtung zur Drehzahlerfassung nach einem dritten Ausführungsbeispiel der Erfindung;
- Fig. 4: ein Prinzipschaltbild einer Vorrichtung zur Drehzahlerfassung nach einem vierten Ausführungsbeispiel der Erfindung;
- Fig. 5: ein Diagramm verschiedener Kurvenverläufe von Ausgangssignalen eines induktiven Sensors, von Ausgangssignalen eines Komparators und eine Abwicklung eines Abschnittes eines Polrades, jeweils für einen fehlerfreien und einen fehlerbehafteten Fall.

Gleiche Bezugszeichen in den einzelnen Figuren bezeichnen gleich bzw. funktionsmäßig einander entsprechende Teile.

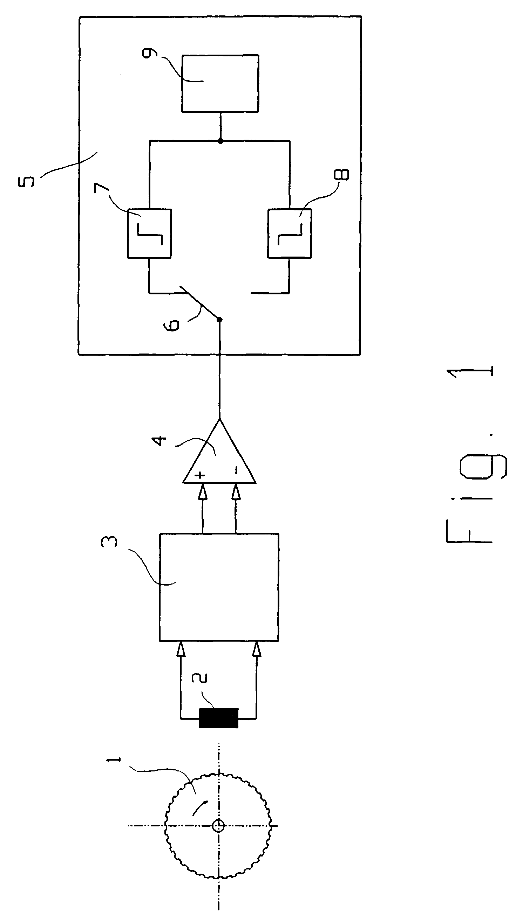

Zunächst sei auf Fig. 1 Bezug genommen. Ein Polrad 1 ist mit dem sich drehenden Teil, dessen Drehzahl gemessen werden soll, verbunden. Dieses Polrad trägt an seinem Außenumfang eine Vielzahl von vorstehenden Zähnen, die möglichst identische Form und Abmessungen haben und in möglichst exakten, äquidistanten Abständen rings des Außenumfanges des Polrades 1 verteilt angeordnet sind. Nahe dem Außenumfang des Polrades ist ein induktiver Sensor 2 angeordnet, der bei Drehung des Polrades 1 ein etwa sinusförmiges Signal (S1 oder S2 in Fig. 5) erzeugt. Dieses Signal wird einem Filter 3 zugeführt, der als Tiefpaß- oder Bandpaßfilter ausgelegt ist und Störfrequenzen, die außerhalb des erwarteten Drehzahlbereiches liegen, ausfiltert. Das Ausgangssignal des Filters 3 wird einem Komparator 4 zugeführt, der auf dem gefilterten, sinusähnlichen Signal ein Rechtecksignal (K1 oder K2 in Fig. 5) bildet. Das Ausgangssignal des Komparators 4 wird einem Mikrorechner 5 zugeführt und dort ausgewertet, um schließlich ein Ausgangssignal zu erzeugen, das in digitaler oder analoger Form möglichst exakt der Drehzahl des Polrades 1 entspricht.

Im Ausführungsbeispiel der Fig. 1 enthält der Mikrocomputer 5 einen Schalter 6, der selbstverständlich als elektronischer Schalter ausgebildet sein kann und der die Ausgangssignale des Komparators 4 entweder einer ersten Auswertelogik 7 oder einer zweiten Auswertelogik 8 zuführt. Diese beiden Auswertelogiken 7 und 8 unterscheiden sich dadurch voneinander, daß eine von ihnen auf positive Flanken des Ausgangssignales des Komparators 4 anspricht und die andere auf negative Flanken. Als positive Flanke wird hier ein von niedrigem Pegel auf höheren Pegel ansteigender Sprung des Ausgangssignales des Komparators 4 definiert, während eine negative Flanke ein Sprung von hohem Pegel auf niedrigem Pegel ist. Die Ausgangssignale beider Auswertelogiken 7 und 8 werden einer Drehzahlberechnungslogik 9 zugeführt.

Der Mikrorechner 5 arbeitet in folgender Weise: Zu Beginn einer Auswertung steht der Schalter 6 in einer Stellung, beispielsweise der dargestellten, bei der der Ausgang des Komparators 4 mit der Auswertelogik 7, die auf positive Flanken anspricht, verbunden ist. Für einen vorgegebenen Zeitraum werden die dort eingehenden Signale ausgewertet, beispielsweise in der Form, daß die Zeitdauer zwischen zwei aufeinanderfolgenden positiven Flanken, d.h. beispielsweise die Periodendauern T11, T12 und T13 gemessen werden. Beispielsweise wird zu Beginn der Periodendauer T11 ein hochfrequenter Zähler gestartet, dessen Zählinhalt am Ende der Periodendauer T11 ein Maß für die zeitliche Länge der Periodendauer T11 ist. Der Mikrorechner 9 wertet dann aus, ob diese Zählergebnisse aufeinanderfolgender Messungen voneinander abweichen und insbesondere, ob Schwankungen in beiden Richtungen feststellbar sind, d.h. ob die Differenz der Meßergebnisses aufeinanderfolgender Messungen einen häufigen Vorzeichenwechsel hat sowie auch, ob diese Differenz betragsmäßig größeren Schwankungen unterliegen. Nach Ablauf der vorgegebenen Zeitdauer wird der Schalter 6 umgeschaltet und die Auswertelogik 8 führt für eine vorgegebene Zeitdauer die entsprechenden Messungen bzw. Auswertungen an den negativen Flanken durch. Anschließend vergleicht die Drehzahlberechnungslogik die Auswertungen der beiden Auswertelogiken 7 und 8 und steuert den Schalter 6 so, daß für die weiteren Messungen diejenige Auswertelogik 7 oder 8 durchgeschaltet bleibt, bei der die geringeren Schwankungen vorkamen.

Dieser Vorgang kann einmalig z.B. beim Anfahren eines Fahrzeuges stattfinden. Er kann aber auch laufend durchgeführt werden, was für den Fall zweckmäßig ist, bei dem ein Polrad mindestens zwei Störstellen aufweist, die sich in entgegengesetzter Weise auf das Komparatorsignal auswirken.

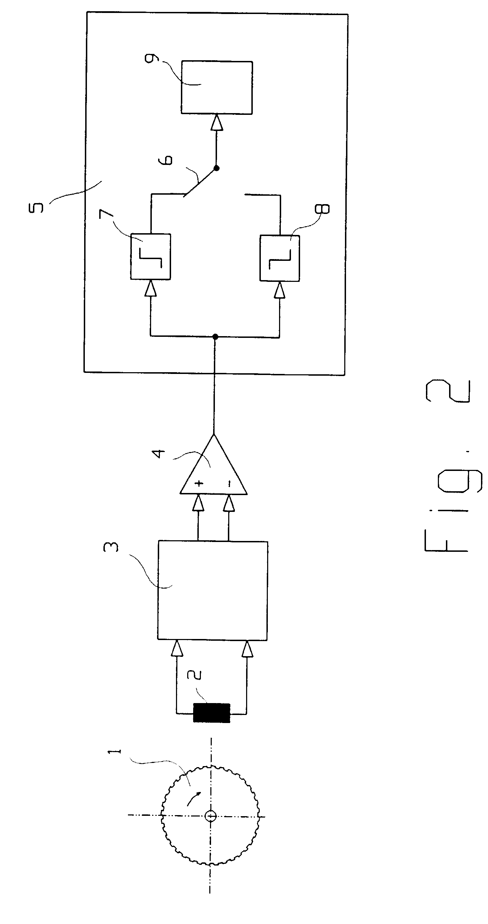

Das Ausführungsbeispiel der Fig. 2 unterscheidet sich von dem der Fig. 1 im wesentlichen dadurch, daß das Ausgangssignal des Komparators 4 ständig beiden Auswertelogiken 7 und 8 zugeführt wird, die also ständig parallel arbeiten. Die Ausgänge der Auswertelogiken 7 und 8 werden wahlweise durch den Schalter 6 der Drehzahlberechnungslogik 9 zugeführt.

Hier sind - wie auch beim Ausführungsbeispiel der Fig. 1 - zwei Betriebsarten möglich. Bei einer ersten Betriebsart ist eine der beiden Auswertelogiken 7 oder 8 durch den Schalter 6 ausgewählt. Nur wenn diese Auswertelogik Schwankungen, die einen Fehler des Polrades signalisieren, ergeben, wird auf die andere Auswertelogik umgeschaltet. Darauf wird geprüft, ob diese andere Auswertelogik ebenfalls Fehler signalisiert. Sind die Fehler dieser zweiten Auswertelogik größer als die der ersten Auswertelogik, so wird auf die erste Auswertelogik zurückgeschaltet, andernfalls bleibt die zweite Auswertelogik wirksam.

In der zweiten Betriebsart wird - wie im Zusammenhang mit Fig. 1 geschildert - zumindest beim Anfahren des Fahrzeuges bzw. allgemeiner gesprochen bei Beginn der Messung die Auswertung durch beide Auswertelogiken durchgeführt und zwar entweder zeitlich nacheinander oder parallel und anschließend diejenige Auswertelogik ausgewählt, die die besseren Ergebnisse brachte.

Im einen Fall wird weniger Rechnerleistung benötigt. Im anderen Fall erhält man bei höherer Rechnerleistung eine Optimierung der Genauigkeit des Meßergebnisses. Bei der erst genannten Betriebsweise wird man eine Fehlertoleranzschwelle vorsehen und erst dann auf die andere Auswertelogik umschalten, wenn die eine Auswertelogik Fehler anzeigt, die größer als ein festgelegter Wert sind.

In diesem Zusammenhang sei darauf hingewiesen, daß die beiden Auswertelogiken 7 und 8 in der Praxis natürlich keine getrennten Baugruppen sind, sondern in einem programmierten Mikroprozessor realisiert sind, der die entsprechenden Funktionen ausführt. Daraus ist ersichtlich, daß das Ausführungsbeispiel der Fig. 2 höhere Rechnerleistung verlangt, da ein und derselbe Mikroprozessor weitestgehend in Echtzeit die beiden Funktionen, d.h. Auswertung nach positiven und nach negativen Flanken durchführen muß. Im Ausführungsbeispiel der Fig. 1 muß der Mikroprozessor dagegen zeitlich nacheinander nur eine der beiden Funktionen der Auswertelogiken 7 oder 8 ausführen.

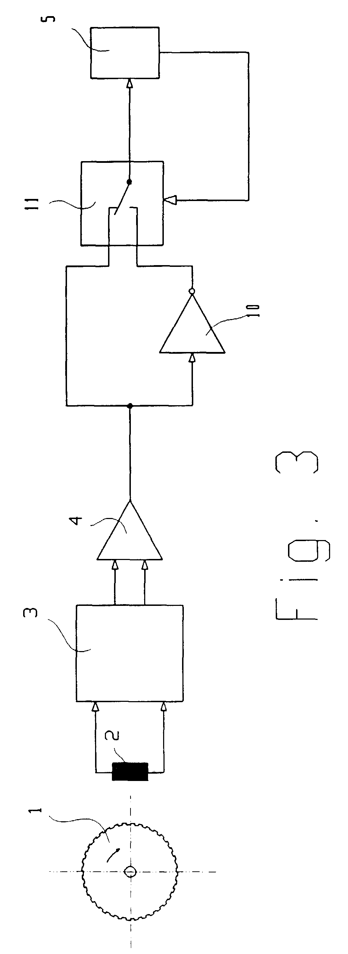

Das Ausführungsbeispiel der Fig. 3 entspricht in dieser Hinsicht prinzipiell dem der Fig. 1, bei dem zeitlich nacheinander entweder die positiven oder die negativen Flanken ausgewertet werden.

Der Ausgang des Komparators 4 ist je nach Stellung eines Schalters 11 entweder direkt mit dem Mikrorechner 5 verbunden oder über einen Invertierer 10. Der Mikrorechner 5 wertet nur eine Art von Flanken, d.h. positive oder negative Flanken des Komparatorsignales aus und enthält funktionsmäßig in der Terminologie der Fig. 1 oder 2 nur eine der Auswertelogiken 7 oder 8 und die Drehzahlberechnungslogik 9. Im Unterschied zum Ausführungsbeispiel der Fig. 1 erfolgt die Umschaltung aber extern durch den Invertierer 10. Der Mikrorechner wertet also nur eine Sorte von Flanken aus. Schwanken die zeitlichen Abstände über ein vorbestimmtes Maß hinaus, so schaltet der Mikrorechner 5 den Schalter 11 um, wodurch das invertierte Signal des Komparators ausgewertet wird. Hierdurch werden im Ergebnis auch die Flanken umgeändert, so daß positive Flanken zu negativen Flanken werden und umgekehrt. Ansonsten arbeitet die Schaltung der Fig. 3 wirkungsmäßig gleich wie die der Fig. 1. Auch hier sind die beiden Betriebsarten möglich, daß der Schalter 11 nur dann umgeschaltet wird, wenn die Fehler ein vorbestimmtes Maß überschreiten oder daß der Schalter nacheinander beide Positionen einnimmt und später die Position gehalten wird, bei der das bessere Signal erhalten wurde.

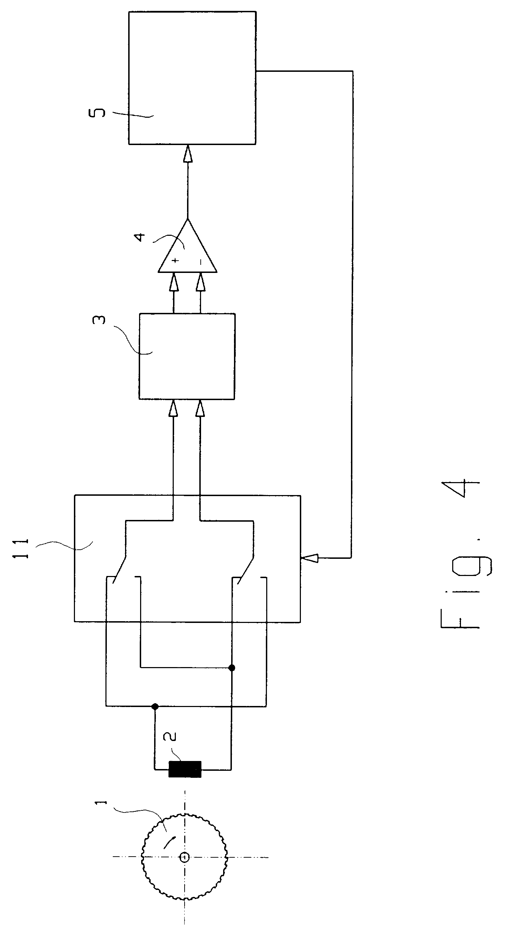

Das Ausführungsbeispiel der Fig. 4 arbeitet funktionsmäßig ähnlich wie das der Fig. 3. Auch hier wertet der Mikrorechner 5 nur eine Art von Flanken aus. Statt des Invertierers 10 der Fig. 3 ist hier jedoch vorgesehen, daß das Ausgangssignal und damit die Polarität des induktiven Sensors 2 umgeschaltet wird. Hierzu ist ein zweipoliger Umschalter 11 vorgesehen, der vom Mikrorechner 5 gesteuert wird und zwischen dem induktiven Sensor 2 und dem Filter 3 liegt. Durch Umschalten des Schalters 11 wird die Polarität gewechselt, was dazu führt, daß steigende und fallende Flanken am Komparatorausgang ihre Eigenschaften in Bezug auf das Störverhalten tauschen. Erhält der Mikrorechner 5 nach dem Umpolen des Sensors ein schlechteres Eingangssignal, so wird wieder auf die ursprüngliche Polung zurückgeschaltet. Auch hier ist allerdings die andere Betriebsart möglich, bei der beide Polungen überprüft werden und diejenige dann beibehalten wird, bei der das bessere Ergebnis erhalten wird.

Zusammenfassend schafft die Erfindung ein Verfahren und eine Vorrichtung zur Drehzahlerfassung mit einem induktiven Sensor, in den durch ein Polrad eine sinusähnliche Spannung induziert wird, die einem Filter und einem dem Filter nachgeschalteten Komparator zugeführt und dort in ein rechteckförmiges Signal, das im wesentlichen der Drehzahl des Polrades proportional ist. Dieses Ausgangssignal des Komparators wird in einem Mikrorechner ausgewertet. Bei dieser Auswertung werden im Mikrorechner nur gleichsinnige Flanken des Komparatorsignales ausgewertet und zwar diejenigen, deren Abstände über einen bestimmten Zeitraum betrachtet weniger stark schwanken. Der Mikrorechner kann dabei zunächst beide Arten von Flanken, d.h. positive und negative Flanken auswerten und für die Berechnung der Drehzahl dann diejenigen Flanken berücksichtigen, bei denen geringere Schwankungen, d.h. Störungen, festgestellt werden. Auch kann der Mikrorechner zunächst nur eine Art von Flanken auswerten und, erst wenn diese Störungen über ein vorbestimmtes Maß hinaus anzeigen, auf Flanken der anderen Art umschalten. Zeigen die Flanken der anderen Art noch größere Störungen als die der ersten Art, so wird wieder auf die erste Art zurückgeschaltet. Die Umschaltung kann im Mikrorechner selbst erfolgen oder auch extern. Die externe Umschaltung auf die Flankenart kann durch einen externen Invertierer erfolgen oder dadurch, daß die Sensorausgangssignale durch einen steuerbaren Schalter umgepolt werden.

## Patentansprüche

1. Verfahren zur Drehzahlerfassung rotierender Teile, insbesondere von Fahrzeugrädern, bei dem ein Sensor ein mit dem rotierenden Teil verbundenes Polrad abtastet und ein im wesentlichen sinusförmiges Ausgangssignal erzeugt, das unter bedarfsweiser zwischenschaltung eines Filters in ein rechteckförmiges Signal mit gleichsinnigen Flanken einer ersten Art und einer zweiten Art, d.h. positiven und negativen Flanken, umgewandelt wird, wobei das rechteckförmige Signal ausgewertet und daraus ein der zu bestimmenden Drehzahl entsprechendes Signal erzeugt wird,
dadurch gekennzeichnet,
daß zur Bestimmung der Drehzahl nur diejenigen gleichsinnigen Flanken des rechteckförmigen Signales ausgewertet werden, deren zeitliche Abstände während eines vorgegebenen Zeitraumes um weniger als ein vorbestimmtes Maß schwanken.

2. Verfahren nach Anspruch 1, dadurch gekennzeichnet, daß alle Flanken des rechteckförmigen Signales untersucht werden und diejenigen gleichsinnigen Flanken zur Berechnung der Drehzahl ausgewertet werden, deren zeitliche Abstände während eines vorgegebenen Zeitraumes geringere Schwankungen als die Flanken der anderen Art aufweisen.

3. Verfahren nach Anspruch 1 oder 2, dadurch gekennzeichnet, daß das vorbestimmte Maß für die zeitlichen Abstände gleichsinniger Flanken veränderbar ist und sich auf die zeitlichen Abstände während eines vorgegebenen Zeitraumes der Flanken der anderen Art bezieht.

4. Verfahren nach Anspruch 1, dadurch gekennzeichnet, daß gleichsinnige Flanken der ersten Art ausgewertet werden, und daß Flanken der anderen Art nur dann ausgewertet werden, wenn die zeitlichen Abstände der gleichsinnigen Flanken der ersten Art während eines vorgegebenen Zeitraumes um mehr als ein fest vorbestimmtes Maß schwanken und daß dann auf die Auswertung der gleichsinnigen Flanken der ersten Art zurückgeschaltet wird, wenn die zeitlichen Abstände der Flanken der anderen Art stärker schwanken, als die der gleichsinnigen Flanken der ersten Art.

5. Vorrichtung zur Drehzahlerfassung rotierender Teile, insbesondere von Fahrzeugrädern, mit einem mit dem rotierenden Teil verbundenen Polrad (1), einem das Polrad (1) abtastenden Sensor (2), der ein sinusähnliches Ausgangssignal erzeugt und einem, ggf. unter Zwischenschaltung eines Filters (3), dem Sensor (2) nachgeschalteten Komparator (4), der ein rechteckförmiges Ausgangssignal erzeugt und mit einem Mikrorechner (5), der das rechteckförmige Ausgangssignal des Komparators (4) auswertet,
dadurch gekennzeichnet,
daß der Mikrorechner (5) eine Auswertelogik (7, 8) aufweist, die die zeitlichen Abstände zwischen gleichsinnigen Flanken des rechteckförmigen Ausgangssignales des Komparators (4) erfaßt und daß eine Umschalteinrichtung (6, 11) vorhanden ist, die die Flanken der anderen Art des rechteckförmigen Signales der Auswertung zuführt, wenn die zeitlichen Abstände der erst genannten gleichsinnigen Flanken während eines vorgegebenen Zeitraumes um mehr als ein vorbestimmtes Maß schwanken.

6. Vorrichtung nach Anspruch 5, dadurch gekennzeichnet, daß die Umschalteinrichtung (6, 11) nur dann umschaltet, wenn die zeitlichen Abstände der momentan ausgewerteten gleichsinnigen Flanken während eines fest vorgegebenen Zeitraumes um mehr als ein fest vorbestimmtes Maß schwanken.

7. Vorrichtung nach Anspruch 5, dadurch gekennzeichnet, daß der Mikrocomputer (5) eine erste Auswertelogik (7) für gleichsinnige Flanken einer ersten Art und eine zweite Auswertelogik (8) für Flanken der anderen Art aufweist und daß die Umschalteinrichtung (6) so verschaltet ist, daß nur eine der beiden Auswertelogiken (7, 8) von einer nachgeschalteten Drehzahlberechnungslogik (9) berücksichtigt werden.

8. Vorrichtung nach Anspruch 7, dadurch gekennzeichnet, daß die Umschalteinrichtung (6) das Ausgangssignal des Komparators (4) wahlweise nur einer der Auswertelogiken (7, 8) zuführt.

9. Vorrichtung nach Anspruch 7, dadurch gekennzeichnet, daß beide Auswahllogiken (7, 8) ständig mit dem Ausgang des Komparators (4) verbunden sind und daß die Umschalteinrichtung (6) nur eine der beiden Auswahllogiken (7 oder 8) mit der Drehzahlberechnungslogik (9) verbindet.

10. Vorrichtung nach Anspruch 5 oder 6, dadurch gekennzeichnet, daß der Mikrorechner (5) nur gleichsinnige Flanken einer Art des rechteckförmigen Ausgangssignales des Komparators (4) auswertet und daß die Umschalteinrichtung (11) entweder den Ausgang des Komparators (4) mit dem Mikrorechner (5) direkt oder in ihrer anderen Stellung über einen Invertierer (10) verbindet.

11. Vorrichtung nach Anspruch 5 oder 6, dadurch gekennzeichnet, daß die Umschalteinrichtung (11) als zweipoliger Polumschalter ausgebildet und unmittelbar dem Sensor (2) nachgeschaltet ist und daß der Mikrocomputer (5) nur gleichsinnige Flanken einer Art auswertet, wobei durch Umschalten des Umschalters und damit Vertauschen der Polarität des Ausgangssignales des Sensors (2) auch der Richtungssinn der auszuwertenden Flanken umgetauscht wird.

12. Vorrichtung nach einem der Ansprüche 1 bis 11, dadurch gekennzeichnet, daß der Mikrocomputer (5) die Umschalteinrichtung (6, 11) so ansteuert, daß während einer ersten Zeitdauer gleichsinnige Flanken der gleichen Art dem Mikrocomputer zugeführt werden, daß der Mikrocomputer anschließend für eine zweite Zeitdauer die Umschalteinrichtung (6, 11) in ihre andere Betriebsstellung bringt, so daß gegenüber den Flanken der ersten Zeitdauer Flanken der anderen Art ausgewertet werden und daß der Mikrocomputer (5) anschließend die Umschalteinrichtung in diejenige Stellung bringt, bei der die zeitlichen Abstände der jeweils gleichsinnigen Flanken die geringeren Schwankungen aufweisen.

## Claims

1. Method of detecting the rotational speed of rotating parts, particularly vehicle wheels, wherein a sensor senses a rotor connected to said rotating part and generates a substantially sinusoidal output signal which, with interposition of a filter if necessary, is converted into a rectangular signal presenting edges of equal orientation of a first type and a second type, i.e. positive and negative edges, with said rectangular signal being analysed and with a signal being derived therefrom in correspondence with the rotational speed to be determined,
**characterised in**
that for rotational speed determination only those edges of equal orientation of said rectangular signal are interpreted which present intervals during a predetermined period, which vary by less than a predetermined measure.

2. Method according to Claim 1, **characterised in** that all the edges of said rectangular signal are checked and that those edges of equal orientation are analysed for a calculation of the rotational speed which present intervals during a predetermined period, which present variations smaller than the variations of said edges of the other type.

3. Method according to Claim 1 or 2, **characterised in** that said predetermined measure of the intervals between edges of equal orientation is variable and refers to the intervals during a predetermined period of said edges of the other type.

4. Method according to Claim 1, **characterised in** that said edges of equal orientation of said first type are analysed and that edges of the other type are analysed only when the intervals between edges of equal orientation of the first type vary by more than an invariably predetermined measure during a predetermined period, and that the routine then returns to the analysis of said edges of equal orientation of the first type when the intervals between the edges of the other type vary more strongly than the edges of equal orientation of the first type.

5. Device for detecting the rotational speed of rotating parts, particularly vehicle wheels, comprising a rotor (1) connected to said rotating part, a sensor (2) sensing said rotor and generating a sinusoidal output signal, and a comparator (4) which is connected on the output side of said sensor (2), possibly with interposition of a filter (3), and which generates a rectangular output signal, and a micro-computer (5) which analyses said rectangular output signal of said comparator (4),
**characterised in**
that said micro-computer includes a logic analyser circuit (7, 8) which detects the intervals between edges of equal orientation of said rectangular output signal of said comparator (4), and that change-over means (6, 11) are provided which supply the occurring edges of said other type of said rectangular signal for evaluation when the intervals between said edges of equal orientation mentioned first vary by more than a predetermined measure during a predetermined period.

6. Device according to Claim 5, **characterised in** that said change-over means (6, 11) are actuated only when the intervals between the instantaneously analysed edges of equal orientation vary by more than an invariably predetermined measure during an invariably predetermined period.

7. Device according to Claim 5, **characterised in** that said micro-computer comprises a first logic analyser circuit (7) for edges of equal orientation of a first type and a second logic analyser circuit (8) for edges of the other type, and that said change-over means (6) are so connected that only one of said two logic analyser circuits (7, 8) will be considered by a logic rotational speed calculator circuit (9) on the output side.

8. Device according to Claim 7, **characterised in** that said change-over means (6) supply the output signal of said comparator (4) only selectively to one of said two logic analyser circuits (7, 8).

9. Device according to Claim 7, **characterised in** that said two logic analyser circuits (7, 8) are permanently connected to the output of said comparator (4), and that said change-over means (6) connect only one of said two logic analyser circuits (7 or 8) to said logic rotational speed calculator circuit (9).

10. Device according to Claim 5 or 6, **characterised in** that said micro-computer (5) analyses only edges of equal orientation of one kind of said rectangular output signal of said comparator (4), and that said change-over means (11) connect the output of said comparator (4) to said micro-computer (5) either directly or in the other position via an inverter (10).

11. Device according to Claim 5 or 6, **characterised in** that said change-over means (11) are configured as bipolar pole-changing means and connected directly to the output side of said sensor (2), and that said micro-computer (5) analyses only edges of equal orientation of one kind, with the directional orientation of the edges to be analysed being changed, too, by change-over of said change-over means and hence by an exchange of the polarity of the output signal of said sensor (2).

12. Device according to any of the Claims 1 to 11, **characterised in** that said micro-computer (5) controls said change-over means (6, 11) in such a way that during a first period edges of equal orientation of the same type are supplied to said micro-computer, that said micro-computer then causes said change-over means (6, 11) to change over to the other operational position for a second period so that edges of the other type, relative to the edges of said first period, are analysed, and that said micro-computer (5) subsequently causes said change-over means to change over into that position at which the intervals between respective edges of equal orientation will present the smaller variations.

## Revendications

1. Procédé à détecter la vitesse de pièces rotatives, en particulier des roues pour véhicules, dans lequel un capteur explore une roue polaire reliée à ladite pièce rotative et engendre un signal de sortie essentiellement sinusoïdal, qui, à intercalage d'un filtre en cas de besoin, est converti dans un signal rectangulaire ayant des flancs de même sens d'un premier type et d'un deuxième type, c.-à-d. des flancs positifs et négatifs, ledit signal rectangulaire étant analysé et un signal étant d'en prise en dérivée en correspondance avec la vitesse à déterminer,
**caractérisé en ce**
que pour la détermination de la vitesse ceux flancs de même sens seulement dudit signal rectangulaire sont analysés qui présentent des intervalles pendant une période prédéfinie, qui subissent une variation plus petite qu'une mesure prédéfinie.

2. Procédé selon la revendication 1, **caractérisé en ce** que tous les flancs dudit signal rectangulaire sont analysés, et en ce que ceux flancs de même sens sont analysés pour le calcul de la vitesse, qui présentent des intervalles pendant une période prédéfinie qui présentent des variations plus petites que les variations desdits flancs de l'autre type.

3. Procédé selon la revendication 1 or 2, **caractérisé en ce** que ladite mesure prédéfinie des intervalles entre des flancs de même sens est variable et se réfère aux intervalles pendant une période prédéfinie desdits flancs de l'autre type.

4. Procédé selon la revendication 1, **caractérisé en ce** que lesdits flancs de même sens dudit premier type sont analysés, et en ce que des flancs de l'ature type ne sont analysés que quand les intervalles entre des flancs de même sens du premier type varient par plus d'une mesure fixe prédéfinie pendant une période prédéfinie, et en ce que le programme ensuite retourne à l'analyse desdits flancs de même sens du premier type quand l'intervalle entre les flancs de l'autre type varient plus fortement que les flancs de même sens du premier type.

5. Dispositif à détecter la vitesse de pièces rotatives, en particulier des roues pour automobiles, comprenant une roue polaire (1) reliée à ladite pièce rotative, un capteur (2) à explorer ladite roue polaire et engendrant un signal de sortie sinusoïdal, et un comparateur (4) qui est relié du côté de sortie dudit capteur (2), éventuellement à intercalage d'un filtre (3), et qui engendre un signal de sortie rectangulaire, et un micro-ordinateur (5) qui analyse ledit signal de sortie rectangulaire dudit comparateur (4),
**caractérisé en ce**
que ledit micro-ordinateur comprend une logique d'évaluation (7, 8) qui explore les intervalles entre des flancs de même sens dudit signal de sortie rectangulaire dudit comparateur (4), et en ce que des moyens commutateurs (6, 11) sont disposés qui fournissent les flancs apparaissants dudit autre type dudit signal rectangulaire pour l'évaluation quand les intervalles entre lesdits premiers flancs de même sens varient par plus d'une mesure prédéfinie pendant une période prédéfinie.

6. Dispositif selon la revendication 5, **caractérisé en ce** que lesdits moyens commutateurs (6, 11) ne sont activés que quand les intervalles entre les flancs de même sens actuellement analysés varient par plus d'une mesure fixe prédéfinie pendant une période fixe prédéfinie.

7. Dispositif selon la revendication 5, **caractérisé en ce** que ledit micro-ordinateur comprend une première logique d'évaluation (7) pour des flancs de même sens d'un premier type et une deuxième logique d'évaluation (8) pour des flancs de l'autre type, et en ce que lesdits moyens commutateurs (6) sont reliés de façon que seulement une desdites deux logiques d'évaluation (7, 8) sera considérée par une logique de calcul de la vitesse (9) du côté de sortie.

8. Dispositif selon la revendication 7, **caractérisé en ce** que lesdits moyens commutateurs (6) fournissent le signal de sortie dudit comparateur (4) seulement sélectivement à une desdites deux logiques d'évaluation (7, 8).

9. Dispositif selon la revendication 7, **caractérisé en ce** que lesdites deux logiques d'évaluation (7, 8) sont reliées, de façon permanente, à la sortie dudit comparateur (4), et en ce que lesdits moyens commutateurs (6) ne relient qu'une seule desdites deux logiques d'évaluation (7 ou 8) à ladite logique de calcul de la vitesse (9).

10. Dispositif selon la revendication 5 ou 6, **caractérisé en ce** que ledit micro-ordinateur (5) évalue seulement des flancs de même sens d'un type dudit signal de sortie rectangulaire dudit comparateur (4), et en ce que lesdits moyens commutateurs (11) relient la sortie dudit comparateur (4) audit micro-ordinateur (5) soit directement, soit, dans l'autre position, via un circuit inverseur (10).

11. Dispositif selon la revendication 5 ou 6, **caractérisé en ce** que lesdits moyens commutateurs (11) sont configurés sous forme d'un moyen commutateurs de connexions polaires et sont reliés directement au côté de sortie dudit capteur (2), et en ce que ledit micro-ordinateur (5) analyse seulement des flancs de même sens d'un type, à l'orientation directionnelle des flancs à analyser étant également changée par commutation desdits moyens commutateurs et donc par échange de polarité du signal de sortie dudit capteur (2).

12. Dispositif selon une quelconque des revendications 1 à 11, **caractérisé en ce** que ledit micro-ordinateur (5) commande lesdits moyens commutateurs (6, 11) de façon que pendant une première période des flancs de même sens du même type soient fournis audit micro-ordinateur, en ce que ledit micro-ordinateur ensuite cause la commutation desdits moyens commutateurs (6, 11) à l'autre position opérationnelle pour une deuxième période, de façon que des flancs de l'autre type soient analysés, relativement aux flancs de ladite première période, et en ce que ledit micro-ordinateur (5) cause ensuite la commutation desdits moyens commutateurs dans la position dans laquelle les intervalles entre des flancs de même sens respectifs présentent les variations plus petites.
